# EUROPEAN PATENT SPECIFICATION

(11) **EP 1 761 921 B1**
(45) Date of publication and mention of the grant of the patent: **06.02.2008**
(21) Application number: 05746938.9
(22) Date of filing: 14.06.2005
(51) Int. Cl.: G11B 7/12, G11B 7/135

(54) **APPARATUS AND METHOD FOR GENERATING A SCANNING BEAM IN AN OPTICAL PICKUP HEAD, MINIATURE OPTICAL PICKUP HEAD AND OPTICAL STORAGE SYSTEM INCORPORATING A MINIATURE PICKUP HEAD**
VORRICHTUNG UND VERFAHREN ZUM ERZEUGEN EINES ABTASTSTRAHLS IN EINEM OPTISCHEN ABNEHMERKOPF, OPTISCHER MINIATUR-ABNEHMERKOPF UND OPTISCHES SPEICHERSYSTEM MIT EINEM MINIATUR-ABNEHMERKOPF
DISPOSITIF ET PROCEDE PERMETTANT DE GENERER UN FAISCEAU DE BALAYAGE DANS UNE TETE DE LECTURE OPTIQUE, TETE DE LECTURE OPTIQUE MINIATURE, ET SYSTEME DE STOCKAGE OPTIQUE COMPRENANT UNE TELLE TETE DE LECTURE OPTIQUE MINIATURE

(30) Priority: 16.06.2004 EP 04300381
(43) Date of publication of application: 14.03.2007
(73) Proprietor: Koninklijke Philips Electronics N.V., 5621 BA Eindhoven (NL)
(72) Inventor: SCHLEIPEN, Johannes Société Civile SPID, F-PARIS 75008 (FR)
(74) Representative: van Oudheusden-Perset, Laure E.
(86) International application number: PCT/IB2005/051956
(87) International publication number: WO 2005/124747

(56) References cited:
- EP-A- 0 532 175
- US-A- 6 104 690
- US-A1- 2002 145 815
- US-A1- 2003 010 431

## Description

### FIELD OF THE INVENTION

This invention relates to apparatus for generating a scanning beam in an optical pickup head for an optical storage system and, more particularly, in a miniature optical pickup head for an optical disc drive.

The invention also relates to a miniature optical pickup head for an optical storage system, and an optical storage system including such an optical pickup head.

### BACKGROUND OF THE INVENTION

Optical information recording has been developed as a high density recording method. The optical storage medium is in the form of a disc or card. A conventional storage medium drive apparatus has a light source, such as a laser, for emitting a light beam, an optical system, for guiding the light beam, a focus lens for focusing the light beam on the surface of the storage medium, and a light detector for converting the light beam reflected from the surface of the storage medium into an electric signal. Examples of such storage media are, for instance, CD-ROM, CD-R, CD-RW, DVD, DVD+RW, Blu-ray Disc (BD), etc. In these examples, the optical storage medium is in the shape of a disc.

As is well known in the art, an optical disc comprises at least one track which is capable of containing data written therein. The disc may be embodied so as to be a read-only disc, whereby the disc is manufactured with data embossed in the track, and this data can only be read from the disc. However, writeable optical discs, which allow a user to record data on a disc, are also known. In this case, a disc will normally be manufactured as a blank disc, i.e. a disc having a track structure but without data recorded within the track. Similarly, disc drive devices may be designed as read-only devices, i.e. devices only capable of reading information from a recorded disc. However, disc drive devices may also be designed for writing information into the track of a recordable disc. Since optical discs, and disc drive devices for reading or writing optical discs, are commonly known, their specific construction and operation will not be discussed herein in detail.

In all cases, however, a disc drive device comprises means for receiving an optical disc and for rotating the optical disc at a predetermined rotational speed. The disc drive device further comprises an optical head or optical pickup unit (OPU), comprising a light beam generator, typically a laser, for directing a laser beam towards the surface of a rotating disc, receiving the reflected beam reflected by the disc, and converting the received reflected beam into an electrical signal. Thus, an optical pickup unit comprises a light beam generator, an optical system for directing the light beam towards the optical disc, a photo-detector for converting light into an electrical signal, and an optical system for receiving reflected light and for directing this reflected light towards the photo-detector.

The photo-detector is required to be positioned very accurately with respect to the returning light beam and, in conventional light path geometry, the returning spot is very carefully aligned on the detector by adjusting the position of the photo-detector in the z-direction (i.e. along the optical axis) relative to the rest of the optics in the optical system.

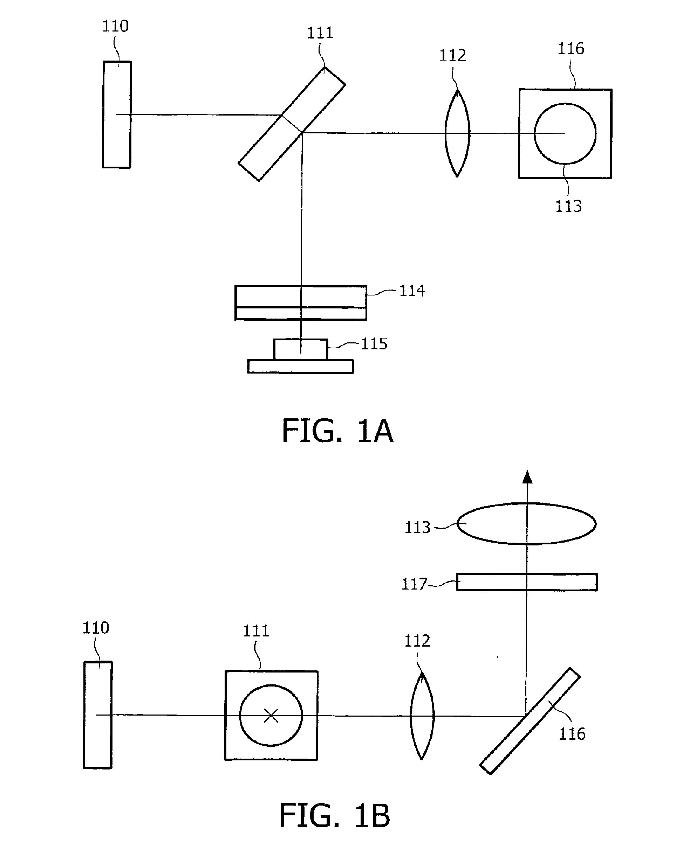

Referring to Figures 1A and 1B of the drawings, there is illustrated schematic plan and side view representations of the principal components of an optical pickup head according to the prior art. As shown, the illustrated optical pickup head comprises a laser diode 115, a grating 114, a photo-detector pre-amp integrated circuit (IC) 110, a beam splitter 111, a collimator 112, an objective lens 113, a folding mirror 116 and a quarter-wave polarizer 117.

In operation, the laser diode 115 generates a laser beam, which then passes through the grating 114 to the beam splitter 111. At the beam splitter 111, part of the laser beam is reflected to the collimator 112 and collimated by the same. The collimated light from the collimator 112 is then reflected by the folding mirror 116 to the quarter-wave polarizer 117. The output light from the quarter-wave polarizer 117 is then focused by the objective lens 113 onto the information surface of the optical disc (not shown) being read. The reflected light from the optical disc (not shown) then propagates in the reverse direction through the quarter-wave polarizer 117, the folding mirror and the collimator 112 to the beam splitter 111. At the beam splitter, the reflected light transmits straight through the beam splitter to the photo-detector pre-amp IC 110. In response to the reflected light, the photo-detector pre-amp IC 110 generates a number of opto-electrical signals that can be processed in a conventional manner to retrieve the data stored on the optical disc.

It is becoming increasingly desirable to produce an optical pickup unit (OPU) which is as compact as possible, and half-height (HH) and slim OPUs are becoming increasingly common. There is one type of known optical pickup head which is only 6.7mm in height. Indeed, miniaturization in optical recording is becoming more and more important. Portable applications require very small and, above all, very slim, optical storage devices, where building height is a key issue. Furthermore, integration is an important step towards cost-down of the optical pick-up head, since fewer components are required and the overall storage device can be more easily assembled and aligned.

Integrated optical pick-up heads in general are known.

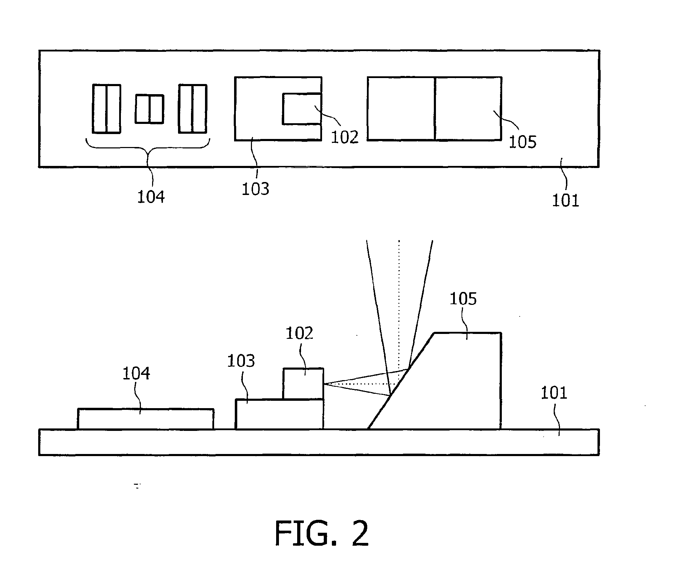

Referring to Figure 2 of the drawings, a known optical pickup unit (OPU) in which a miniaturised light path geometry is employed, comprises a substrate 101, a laser 102 mounted on a laser mount 103 provided on the substrate 101, a photo-detector 104 and a mirror or grating element 105. In the miniaturised light path geometry illustrated schematically in Figure 2, the photo-detector 104 is formed as an integral part of the substrate 101.

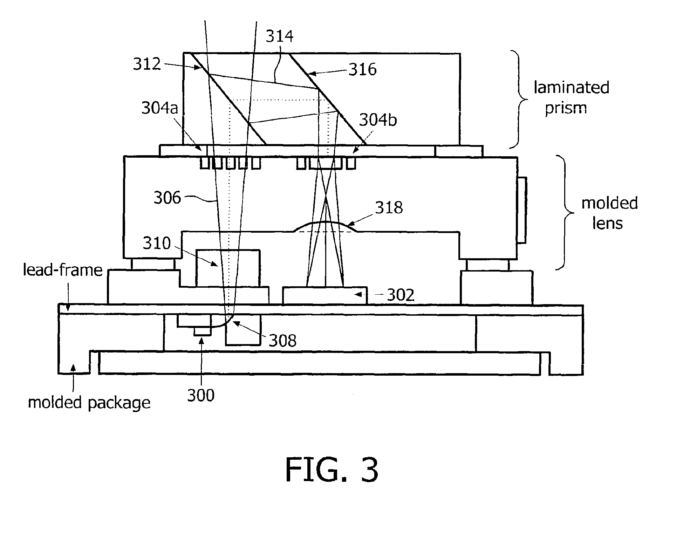

Referring to Figure 3 of the drawings, another known compact optical pick-up head comprises a blue laser 300, a photo-diode integrated circuit 302 and an optical system comprised of gratings 304a, 304b and polarizing optics. More specifically, in use, a beam 306 of radiation emitted by the laser source 300 is reflected by a mirror 308 through a half-wave polarizer 310 to a first grating 304a. After passing through the first grating 304a, part of the beam 306 passes through a polarizing beamsplitter 312 to a collimator lens and an objective lens (not shown) which focuses the beam onto the surface of an optical storage medium. A beam 314 of radiation reflected from the optical storage medium propagates back to the optical system, where at least part of the reflected beam 314 is directed by the polarizing beamsplitter 312 toward a mirror 316 which reflects the beam toward the photo-diode integrated circuit 302 via a second grating 304b and a cylindrical lens 318. In response to the reflected light, the photo-detector IC 302 generates a number of opto-electrical signals that can be processed in a conventional manner to retrieve the data stored on the optical disc.

However, even this is considered for some applications to be too thick. Furthermore, the total number of optical components constituting the optical pickup head is large, thus increasing the structural complexity of the optical system of the pickup head and leading to a constraint in respect of making the OPU slimmer, as well as increasing the cost of materials and the manufacturing process, and limiting the production yield due to the number of components, and the resultant process equipment, gluing operations and manpower required to assemble a conventional optical pickup head. Still further, the device described above with reference to Figure 3 of the drawings emits a diverging beam 306a and hence an additional collimator lens is required to make a parallel beam prior to focusing by the objective lens onto the surface of the storage medium.

Prior art document US2002/0145815 A1 discloses an optical head device which comprises a light source, a light receiving element, an optical system that guides light emitted by the light source to an optical recording medium and also guides the light reflected from the optical recording medium to the light receiving element and a base on which the light source, the light receiving element and optical elements constituting the optical system are mounted. An element holder composed of a photosensitive glass is mounted on the base. The element holder has positioning portions therein for at least one of the optical elements.

A similar system, using a red laser, is also known which comprises a finite conjugate system where the objective lens is part of the pickup head, such that the pickup head must be positioned directly underneath the storage medium.

Nevertheless, having the laser and detector located at the so-called "fixed world" (i.e. fixed parts of the drive relative to the actuator, which is moveable so as to move the objective lens in radial and focus directions, as required), as opposed to on an arm or sledge, as in one known arrangement, has some major advantages, but in order for such an arrangement to be realised, a well-collimated beam of radiation must travel from the "fixed world" of the pickup to the objective lens which is moveably mounted underneath the optical storage medium.

### OBJECT AND SUMMARY OF THE INVENTION

It is an object of the present invention to provide apparatus for generating a (perfectly or near-) collimated scanning beam in an optical pickup head for an optical storage system, and a compact optical pickup head which emits the scanning beam. It is also an object of the present invention to provide an optical storage system incorporating such an optical pickup head, and a method of producing a collimated scanning beam in such an optical pickup head.

In accordance with the present invention, there is provided apparatus for generating a scanning beam in an optical pickup head for an optical storage system, the apparatus comprising a radiation source for emitting a radiation beam, collimator means for collimating said radiation beam, an optical element for directing said radiation beam from said collimator means toward an exit point of said apparatus, said collimator means and said optical element being provided in or on a substrate, the apparatus further comprising means for moving said substrate so as to move said collimator means and said optical element relative to said radiation beam in a direction substantially parallel to the optical axis of said collimator means, so as to adjust the alignment of said collimator means relative to said radiation source.

Also in accordance with the present invention, there is provided an optical pickup head for an optical storage system including means for focusing a scanning beam onto a surface of an optical storage medium, the optical pickup head comprising apparatus for generating a scanning beam as defined above, and means for receiving a beam of radiation reflected from said surface of said optical storage medium.

In a preferred embodiment, the optical pickup head comprises a second substrate on which the radiation source is provided, wherein said collimator means is movable in a direction substantially parallel to said first and second substrates. Beneficially, the first substrate comprises a cover plate, wherein said cover plate and said second substrate define a cavity there between, and wherein said collimator means and said optical element are provided on said cover plate such that they extend into said cavity, said cover plate being movable so as to move said collimator means relative to said radiation beam in a direction substantially parallel to the optical axis of said collimator means.

Preferably, the apparatus comprises an integrated optical system including said collimator means and said optical element, preferably comprising reflective or diffractive means such as a 45 degree mirror or a diffraction grating, for directing said radiation beam from said collimator means toward an exit point of the arrangement. Another optical element, preferably diffractive means, may be provided at the exit point. In one exemplary embodiment, the apparatus may comprise means for folding the optical path of the radiation beam prior to incidence thereof on said collimator means.

Beneficially, the optical pickup head further comprises a second cover plate, in contact with the first cover plate, the second cover plate having an optical element, preferably diffractive means, for directing a returning beam towards a detector. The second cover plate can beneficially be tilted relative to the first cover plate. The second cover plate is beneficially rotatable relative to the first cover plate, preferably about an axis which is substantially perpendicular to the optical axis of the collimator means. The first cover plate may have a convex portion within which said second cover plate is located.

Still further in accordance with the present invention, there is provided an optical storage system comprising an optical pickup head as defined above, means for focussing a scanning beam emitted by said optical pickup head onto a surface of an optical storage medium, and means for generating a signal representative of radiation reflected from said surface of said optical storage medium and received by said optical pickup head.

The present invention also extends to a method of generating a scanning beam in an optical pickup head for an optical storage system, the method comprising the step of :
- providing a radiation source for emitting a radiation beam,
- providing collimator means for collimating said radiation beam,
- directing said radiation beam by an optical element for from said collimator means toward an exit point of said apparatus, said collimator means being provided in or on a substrate,
the method further comprising the step of moving said substrate so as to move said collimator means relative to said radiation beam in a direction substantially parallel to the optical axis of said collimator means, so as to adjust the alignment of said collimator means relative to said radiation source.

These and other aspects of the present invention will be apparent from, and elucidated with reference to the embodiments described herein.

### BRIEF DESCRIPTION OF THE DRAWINGS

Embodiments of the present invention will now be described by way of examples only and with reference to the accompanying drawings, in which:
Figure 1A is a schematic side view representation of the principal components of an optical pickup head according to the prior art;
Figure 1B is a schematic plan view representation of the principal components of an optical pickup head according to the prior art;
Figure 2 is a schematic plan view (top diagram) and side view (bottom diagram) of a miniaturized optical pickup unit (OPU) according to the prior art;
Figure 3 is a schematic cross-sectional view of a miniaturized optical pickup according to the prior art, incorporating a blue laser diode, a photo diode integrated circuit and beamsplitting optics, wherein the total size of the module can be 11 x 6 x 4 mm;
Figure 4 is a schematic cross-sectional view of apparatus according to an exemplary embodiment of the invention for generating a scanning beam in an optical pickup head for an optical storage system;
Figure 5 is a schematic cross-section view of an optical pickup head according to a first exemplary embodiment of the present invention;
Figures 6a and 6b are schematic cross-section and plan views respectively of an optical pickup head according to a second exemplary embodiment of the present invention;
Figures 7a and 7b are schematic cross-sectional and plan view respectively of an optical pickup head according to a third exemplary embodiment of the present invention;
Figure 8 is a schematic plan view of an optical pickup head according to a fourth exemplary embodiment of the present invention; and
Figure 9 is a perspective view of an optical pickup head package according to an exemplary embodiment of the present invention.

### DETAILED DESCRIPTION OF THE INVENTION

It is an object of the present invention to enable the provision of a miniaturised optical pickup system in which a (perfectly or near-) collimated output beam is generated. This object can be achieved by incorporating collimation optics inside the pickup head. In this respect there are, among others, two main restrictions :
a) building height should be kept to a minimum, and
b) the collimator should be aligned actively in order to reduce the adverse effects of defocus.

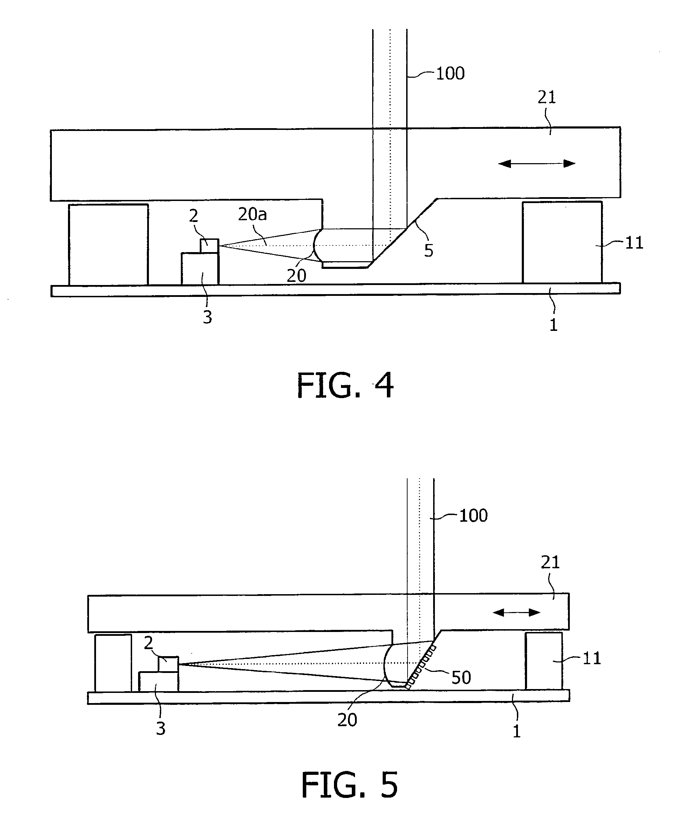

Referring to Figure 4 of the drawings, there is illustrated schematically an optical pickup head according to an exemplary embodiment of the present invention, in which a collimator lens and mirror (or grating) are integrated on a substrate that can be moved in a single horizontal direction, parallel to the pickup substrate and parallel to the optical axis of the collimator lens.

The illustrated optical pickup head comprises a substrate I on which is provided a laser mount 3 supporting a laser source 2. A cover plate mount 11 is provided at the periphery of the substrate 1, which couples the substrate 1 to a cover plate 21. An optical system, comprising a collimator lens 20 and a 45 degree mirror 5 (or grating, in an alternative exemplary embodiment), is attached to, or integrated with the cover plate 21, such that the optical system extends into the cavity defined between the substrate 1 and the cover plate 21. The cover plate 21 is moveably mounted relative to the substrate 1, such that it (and, therefore, the optical system provided thereon) can be moved in a single horizontal direction, parallel to the pickup substrate 1 and parallel to the optical axis 20a of the collimator lens 20.

As a result, the outcoming laser beam 100 can be collimated precisely, or, if desirable, nearly collimated with a certain amount of defocus. Further, by collimating in-plane, parallel to the substrate, the total building height of the device can be kept small and constant, since no additional collimator lens is required. The cover plate 21 and the cover plate mounts 11 can be made such that the cover plate, and hence the collimator lens, can be adjusted only in one direction; perpendicular to the pupil of the collimator lens. The cover plate 21 can be made as a single plastic moulded component.

It will be appreciated that the 45 degree mirror 5 is required, in the illustrated embodiment, to couple the light out of the plane of the substrate 1. This could equally well be achieved using a grating beam shaper 50, as in the embodiment illustrated in Figure 5 of the drawings, wherein all of the other components are the same as those of the embodiment illustrated in Figure 4 of the drawings, and the same reference numbers are used to denote like components.

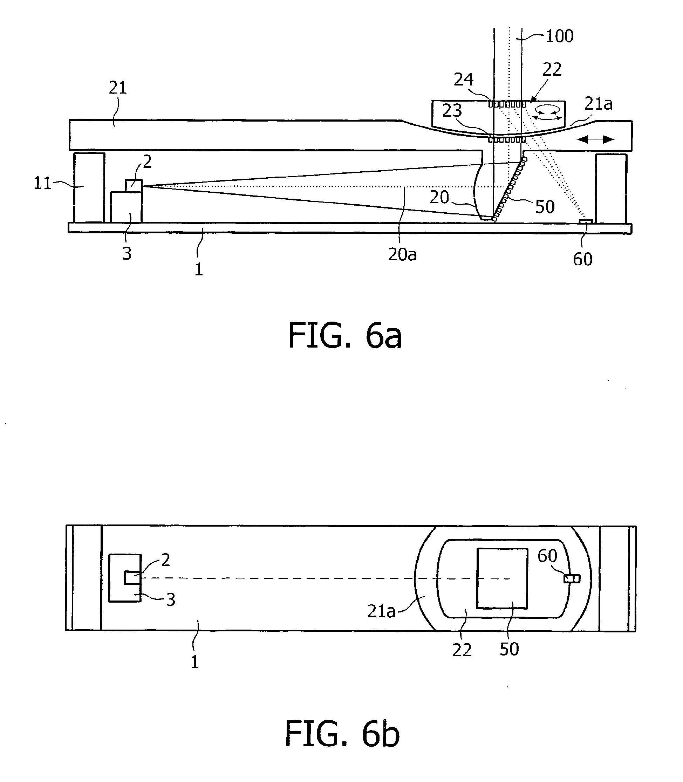

Referring to Figures 6a and 6b of the drawings, an optical head according to another exemplary embodiment of the present invention is similar in many respects to that of Figure 5, and like reference numerals will be used herein to denote like components. However, in this case, the upper surface of the cover plate 21 is provided with a concave portion 21 a, over which is provided a second cover plate 22. The first cover plate 21 is provided with a grating 23, in the concave portion thereof, within the light path of the exiting light beam and the second cover plate 22 is also provided with a grating 24, also within the light path of the exiting light beam 100, as shown. The pupil diameter of the collimator lens 20 may, for example, be 0.5 mm.

The purpose of grating 23 is to provide two additional satellite beams next to the central beam for 3-sot push-pull radial tracking. In principle, this grating 23 is fixed to 21 and does not require additional alignment. The purpose of grating 24 is to direct to backward travelling beam (i.e. the beam is reflected by the optical disc) towards the detector 60. The grating needs two alignments, reflecting the in-plane X-Y centering of the spot onto the detector.

The first alignment can be achieved by a tilt of the grating along an axis that is perpendicular to the drawing plane (corresponding to the X-alignment at the detector, where X is along the line from laser source to mirror 50). For this tilt to be adjusted properly the second cover plate ha a convex surface that fits exactly into the concave surface of the first cover plate 21.

The second alignment of grating 24 is a rotation of the grating along the optical axis along the emerging beam 100 (corresponding to the Y-alignment at the detector, where Y is in the plane of substrate 1 and perpendicular the line from laser source to mirror 50. The rotation of the second cover plate can be achieved by using the same convex/concave surfaces.

It is noted that it makes more sense to speak of one rotation and of one tilt adjustment of grating 24. Consequently, the returning light beam can be aligned precisely onto the detector 60. Again, this can be achieved while consuming only a very small amount of building height.

It will be appreciated that the overall size of a pickup head according to the invention is primarily determined by the pupil size of the collimator lens 20. Pupil size, together with the required rim intensity determines the focal length of the collimator lens 20. For a Blu-ray Disc system, this can be significantly more than 10mm, giving rise to an elongated device. However, folding the light path using a mirror arrangement or simple right-angle prism, for example, can drastically reduce the overall length of the device.

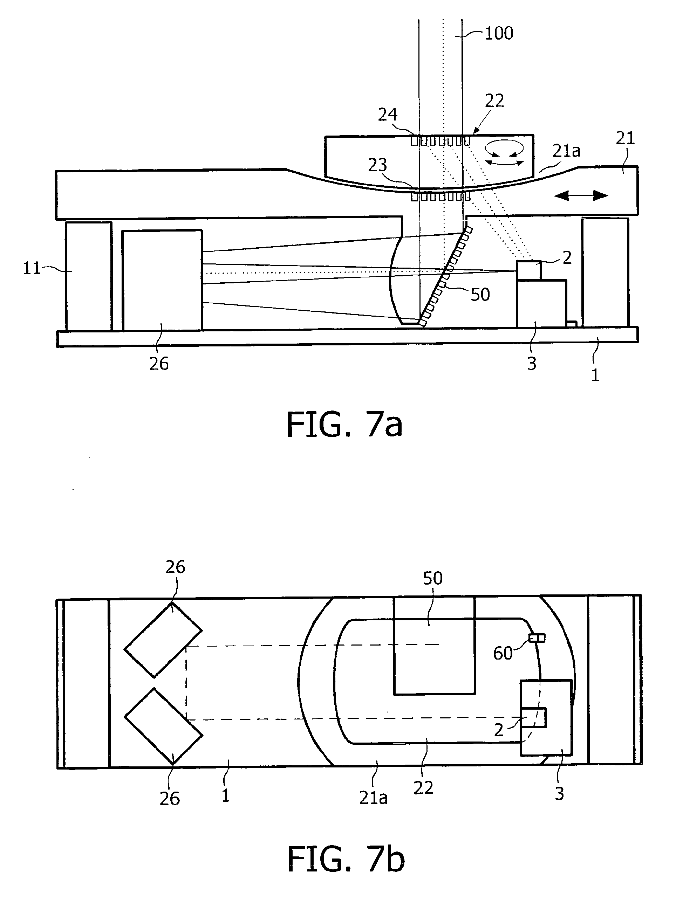

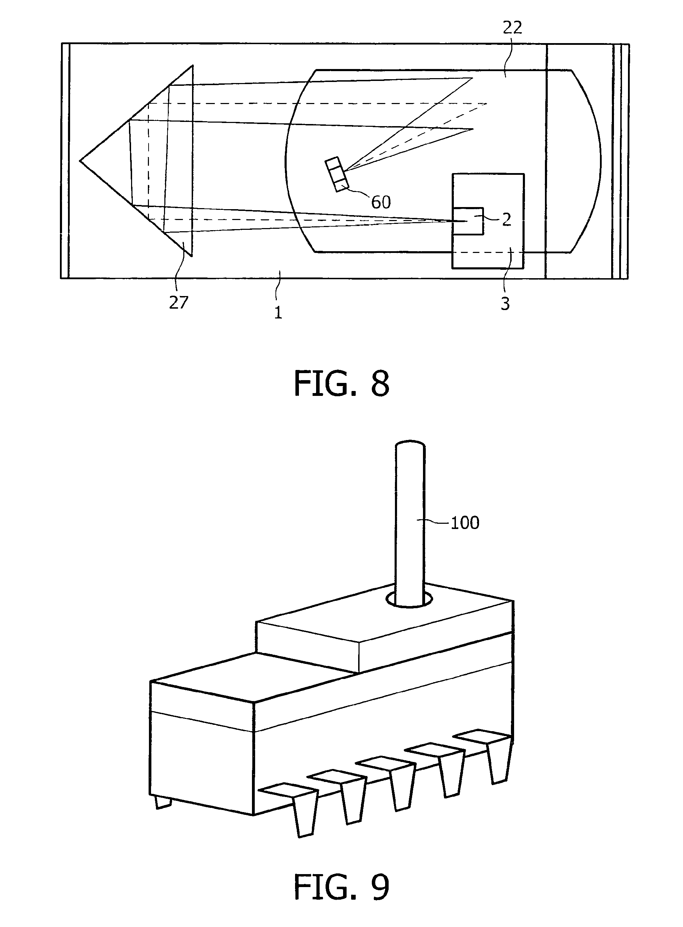

Accordingly, referring to Figures 7a and 7b of the drawings, an exemplary miniaturised, folded optical pickup head is illustrated schematically, which incorporates a pair of mirrors 26 (or a right-angled prism - see Figure 8) for folding the light path of the beam of radiation generated by the source 2. All of the other components in the illustrated arrangement are the same as those of the arrangement illustrated in Figure 6 of the drawings, and will not be further described herein.

Similarly, referring to Figure 8 of the drawings, another exemplary miniaturised, folded optical pickup head is illustrated schematically, which incorporates a right-angle prism 27 for folding the light path of the beam of radiation generated by the source 2. Again, all of the other components in the illustrated arrangement are the same as those of the arrangement of Figures 6 and 7, and will not be described further herein.

A schematic illustration of an optical pickup head package achieved as a result of an exemplary embodiment of the present invention, is provided in Figure 9 of the drawings. Dimensions of the order of 8.5 x 3.5 x 4.5 mm (1 x w x h), or even 6 x 3.5 x 3.5 mm can be achieved.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. The invention may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. Apparatus for generating a scanning beam (100) in an optical pickup head for an optical storage system, the apparatus comprising :
- a radiation source (2) for emitting a radiation beam,
- collimator means (20) for collimating said radiation beam,
- an optical element (5, 50) for directing said radiation beam from said collimator means (2) toward an exit point of said apparatus,
said collimator means (20) and said optical element being provided in or on a substrate (21),
the apparatus **characterized by** further comprising means for moving said substrate (21) so as to move said collimator means (20) and said optical element (5, 50) relative to said radiation beam in a direction parallel to the optical axis (20a) of said collimator means (20), so as to adjust the alignment of said collimator means (20) relative to said radiation source.

2. Apparatus according to Claim 1, wherein said optical element (5, 50) comprises reflective or diffractive means.

3. Apparatus according to Claim 1, wherein an optical element (23) is provided at said exit point.

4. Apparatus according to Claim 3, wherein said optical element comprises a diffraction grating (23).

5. Apparatus according to Claim 1, further comprising means (26, 27) for folding the optical path of the radiation beam prior to incidence thereof on said collimator means (20).

6. An optical pickup head for an optical storage system including means for focusing a scanning beam onto a surface of an optical storage medium, the optical pickup head comprising apparatus for generating a scanning beam according to Claim 1, and means (60) for receiving a beam of radiation reflected from said surface of said optical storage medium.

7. An optical pickup head according to Claim 6, comprising a second substrate (1) on which the radiation source (2) is provided, wherein said collimator means (20) is movable in a direction parallel to said first and second substrates (2, 21).

8. An optical pickup head according to Claim 7, wherein said first substrate comprises a first cover plate (21), wherein said cover plate (21) and said second substrate (1) define a cavity there between, and wherein said collimator means (20) and said optical element (5, 50) are provided on said cover plate (21) such that they extend into said cavity, said cover plate (21) being movable so as to move said collimator means (20) relative to said radiation beam in a direction parallel to the optical axis (20a) of said collimator means (20).

9. An optical pickup head according to Claim 8, further comprising a second cover plate (22), in contact with the first cover plate (21), the second cover plate (22) having an optical element (24), for directing a returning beam towards a detector (60).

10. An optical pickup head according to Claim 9, wherein said optical element is a diffraction grating (24).

11. An optical pickup head according to Claim 10, wherein the second cover plate (22) can be tilted relative to the first cover plate (21).

12. An optical pickup head according to Claim 11, wherein the second cover plate (22) is rotatable relative to the first cover plate (21).

13. An optical pickup head according to Claim 12, wherein the second cover plate (22) is rotatable relative to said first cover plate (21) about an axis which is perpendicular to the optical axis (20a) of the collimator means (20).

14. An optical pickup head according to Claim 8, wherein the first cover plate (21) has a convex portion (21a) within which said second cover plate (22) is located.

15. An optical storage system comprising an optical pickup head according to Claim 7, means for focussing a scanning beam (100) emitted by said optical pickup head, onto a surface of an optical storage medium, and means for generating a signal representative of radiation reflected from said surface of said optical storage medium and received by said optical pickup head.

16. A method of generating a scanning beam (100) in an optical pickup head for an optical storage system, the method comprising the step of :
- providing a radiation source (2) for emitting a radiation beam,
- providing collimator means (20) for collimating said radiation beam,
- directing said radiation beam by an optical element (5, 50) for from said collimator means (20) toward an exit point of said apparatus, said collimator means (20) being provided in or on a substrate (21),
the method **characterized by** further comprising the step of moving said substrate so as to move said collimator means (20) relative to said radiation beam in a direction parallel to the optical axis (20a) of said collimator means (20), so as to adjust the alignment of said collimator means (20) relative to said radiation source.

## Patentansprüche

1. Gerät zum Erzeugen eines Abtaststrahls (100) in einem optischen Abnehmerkopf für ein optisches Speichersystem, wobei das Gerät Folgendes umfasst:
- eine Strahlungsquelle (2) zum Aussenden eines Strahlenbündels,
- Kollimatormittel (20) zum Kollimieren des Strahlenbündels,
- ein optisches Element (5, 50) zum Richten des Strahlenbündels von den Kollimatormitteln (2) zu einem Austrittspunkt des Gerätes,
wobei die Kollimatormittel (20) und das optische Element in oder auf einem Substrat (21) vorgesehen sind,
wobei das Gerät **dadurch gekennzeichnet ist**, das es ferner Mittel zum Bewegen des Substrats (21) umfasst, um die Kollimatormittel (20) und das optische Element (5, 50) in Bezug auf das Strahlenbündel in einer Richtung zu bewegen, die parallel zur optischen Achse (20a) der Kollimatormittel (20) ist, um die Ausrichtung der Kollimatormittel (20) in Bezug auf die Strahlungsquelle einzustellen.

2. Gerät nach Anspruch 1, bei dem das optische Element (5, 50) Reflexions- oder Beugungsmittel umfasst.

3. Gerät nach Anspruch 1, bei dem ein optisches Element (23) am Austrittspunkt vorgesehen ist.

4. Gerät nach Anspruch 3, bei dem das optische Element ein Beugungsgitter (23) umfasst.

5. Gerät nach Anspruch 1, das ferner Mittel (26, 27) zum Falten des Strahlengangs des Strahlenbündels vor dem Auftreffen desselben auf die Kollimatormittel (20) umfasst.

6. Optischer Abnehmerkopf für ein optisches Speichersystem mit Mitteln zum Fokussieren eines Abtaststrahls auf eine Oberfläche eines optischen Speichermediums, wobei der optische Abnehmerkopf ein Gerät zum Erzeugen eines Abtaststrahls nach Anspruch 1 und Mittel (60) zum Empfangen eines von der Oberfläche des optischen Speichermediums reflektierten Strahlenbündels umfasst.

7. Optischer Abnehmerkopf nach Anspruch 6, der ein zweites Substrat (1) umfasst, auf dem die Strahlungsquelle (2) vorgesehen ist, wobei die Kollimatormittel (20) in einer Richtung beweglich sind, die parallel zum ersten und zweiten Substrat (1,21) ist.

8. Optischer Abnehmerkopf nach Anspruch 7, bei dem das erste Substrat eine erste Abdeckplatte (21) umfasst, wobei die Abdeckplatte (21) und das zweite Substrat (1) zwischen sich einen Hohlraum definieren und wobei die Kollimatormittel (20) und das optische Element (5, 50) so auf der Abdeckplatte (21) vorgesehen sind, dass sie sich in den Hohlraum erstrecken, wobei die Abdeckplatte (21) beweglich ist, um die Kollimatormittel (20) in Bezug auf das Strahlenbündel in einer Richtung zu bewegen, die parallel zur optischen Achse (20a) der Kollimatormittel (20) ist.

9. Optischer Abnehmerkopf nach Anspruch 8, der ferner eine zweite Abdeckplatte (22) umfasst, die sich in Kontakt mit der ersten Abdeckplatte (21) befindet, wobei die zweite Abdeckplatte (22) ein optisches Element (24) zum Richten eines zurückkehrenden Strahlenbündels zu einem Detektor (60) aufweist.

10. Optischer Abnehmerkopf nach Anspruch 9, bei dem das optische Element ein Beugungsgitter (24) ist.

11. Optischer Abnehmerkopf nach Anspruch 10, bei dem die zweite Abdeckplatte (22) in Bezug auf die erste Abdeckplatte (21) geneigt werden kann.

12. Optischer Abnehmerkopf nach Anspruch 11, bei dem die zweite Abdeckplatte (22) in Bezug auf die erste Abdeckplatte (21) drehbar ist.

13. Optischer Abnehmerkopf nach Anspruch 12, bei dem die zweite Abdeckplatte (22) in Bezug auf die erste Abdeckplatte (21) um eine Achse drehbar ist, die senkrecht zur optischen Achse (20a) der Kollimatormittel (20) ist.

14. Optischer Abnehmerkopf nach Anspruch 8, bei dem die erste Abdeckplatte (21) einen konvexen Abschnitt (21a) aufweist, in dem sich die zweite Abdeckplatte (22) befindet.

15. Optisches Speichersystem, das Folgendes umfasst: einen optischen Abnehmerkopf nach Anspruch 7, Mittel zum Fokussieren eines vom optischen Abnehmerkopf ausgesandten Abtaststrahls (100) auf eine Oberfläche eines optischen Speichermediums und Mittel zum Erzeugen eines Signals, das die von der Oberfläche des optischen Speichermediums reflektierte und vom optischen Abnehmerkopf empfangene Strahlung darstellt.

16. Verfahren zum Erzeugen eines Abtaststrahls (100) in einem optischen Abnehmerkopf für ein optisches Speichersystem, wobei das Verfahren folgende Schritte umfasst:
- Bereitstellen einer Strahlungsquelle (2) zum Aussenden eines Strahlenbündels,
- Bereitstellen von Kollimatormitteln (20) zum Kollimieren des Strahlenbündels,
- Richten des Strahlenbündels mittels eines optischen Elements (5, 50) von den Kollimatormitteln (20) zu einem Austrittspunkt des Gerätes, wobei die Kollimatormittel (20) in oder auf einem Substrat (21) vorgesehen sind,
wobei das Verfahren **dadurch gekennzeichnet ist, dass** es ferner den Schritt des Bewegens des Substrats umfasst, um die Kollimatormittel (20) in Bezug auf das Strahlenbündel in einer Richtung zu bewegen, die parallel zur optischen Achse (20a) der Kollimatormittel (20) ist, um die Ausrichtung der Kollimatormittel (20) in Bezug auf die Strahlungsquelle einzustellen.

## Revendications

1. Appareil pour générer un faisceau de balayage (100) dans une tête de lecture optique pour un système de stockage optique, l'appareil comprenant :
- une source de rayonnement (2) pour émettre un faisceau de rayonnement,
- un moyen collimateur (20) pour orienter ledit faisceau de rayonnement,
- un élément optique (5, 50) pour diriger ledit faisceau de rayonnement dudit moyen collimateur (2) vers un point de sortie dudit appareil,
ledit moyen collimateur (20) et ledit élément optique étant fournis dans ou sur un substrat (21),
l'appareil étant **caractérisé en ce qu'**il comprend, de plus, un moyen pour déplacer ledit substrat (21) de manière à déplacer ledit moyen collimateur (20) et ledit élément optique (5, 50) par rapport audit faisceau de rayonnement dans une direction parallèle à l'axe optique (20a) dudit moyen collimateur (20), de manière à ajuster l'alignement dudit moyen collimateur (20) par rapport à ladite source de rayonnement.

2. Appareil selon la revendication 1, dans lequel ledit élément optique (5, 50) comprend des moyens réflecteur ou à effet de diffraction.

3. Appareil selon la revendication 1, dans lequel un élément optique (23) est fourni audit point de sortie.

4. Appareil selon la revendication 3, dans lequel ledit élément optique comprend une grille de diffraction (23).

5. Appareil selon la revendication 1, comprenant, de plus, un moyen (26, 27) pour faire dévier le trajet optique du faisceau de rayonnement avant son incidence sur ledit moyen collimateur (20).

6. Tête de lecture optique pour un système de stockage optique incluant un moyen pour focaliser un faisceau de balayage sur une surface d'un support de stockage optique, la tête de lecture optique comprenant l'appareil pour générer un faisceau de balayage selon la revendication 1, et un moyen (60) pour recevoir un faisceau de rayonnement réfléchi à partir de ladite surface dudit support de stockage optique.

7. Tête de lecture optique selon la revendication 6, comprenant un deuxième substrat (1) sur lequel la source de rayonnement (2) est fournie, dans laquelle ledit moyen collimateur (20) est déplaçable dans une direction parallèle auxdits premier et deuxième substrats (2, 21).

8. Tête de lecture optique selon la revendication 7, dans laquelle ledit premier substrat comprend une première plaque couvercle (21), dans laquelle ladite plaque couvercle (21) et ledit deuxième substrat (1) définissent une cavité entre eux, et dans laquelle ledit moyen collimateur (20) et ledit élément optique (5, 50) sont fournis sur ladite plaque couvercle (21) de telle sorte qu'ils s'étendent dans ladite cavité, ladite plaque couvercle (21) étant déplaçable de manière à déplacer ledit moyen collimateur (20) par rapport audit faisceau de rayonnement dans une direction parallèle à l'axe optique (20a) dudit moyen collimateur (20).

9. Tête de lecture optique selon la revendication 8, comprenant, de plus, une deuxième plaque couvercle (22), en contact avec la première plaque couvercle (21), la deuxième plaque couvercle (22) ayant un élément optique (24), pour diriger un faisceau en retour vers un détecteur (60).

10. Tête de lecture optique selon la revendication 9, dans laquelle ledit élément optique est une grille de diffraction (24).

11. Tête de lecture optique selon la revendication 10, dans laquelle la deuxième plaque couvercle (22) peut être basculée par rapport à la première plaque couvercle (21).

12. Tête de lecture optique selon la revendication 11, dans laquelle la deuxième plaque couvercle (22) peut tourner par rapport à la première plaque couvercle (21).

13. Tête de lecture optique selon la revendication 12, dans laquelle la deuxième plaque couvercle (22) peut tourner par rapport à la première plaque couvercle (21) autour d'un axe qui est perpendiculaire à l'axe optique (20a) du moyen collimateur (20).

14. Tête de lecture optique selon la revendication 8, dans laquelle la première plaque couvercle (21) a une partie convexe (21a) dans laquelle la deuxième plaque couvercle (22) est située.

15. Système de stockage optique comprenant une tête de lecture optique selon la revendication 7, un moyen pour mettre au point un faisceau de balayage (100) émis par ladite tête de lecture optique, sur une surface d'un support de stockage optique, et un moyen pour générer un signal représentatif du rayonnement réfléchi depuis ladite surface dudit support de stockage optique et reçu par ladite tête de lecture optique.

16. Procédé de génération d'un faisceau de balayage (100) dans une tête de lecture optique pour un système de stockage optique, le procédé comprenant les étapes suivantes :
- fournir une source de rayonnement (2) pour émettre un faisceau de rayonnement,
- fournir un moyen collimateur (20) pour orienter ledit faisceau de rayonnement,
- diriger ledit faisceau de rayonnement par un élément optique (5, 50) depuis ledit moyen collimateur (20) vers un point de sortie dudit appareil, ledit moyen collimateur (20) étant fourni dans ou sur le substrat (21),
le procédé étant **caractérisé en ce qu'**il comprend de plus l'étape de déplacer ledit substrat de manière à déplacer ledit moyen collimateur (20) par rapport audit faisceau de rayonnement dans une direction parallèle à l'axe optique (20a) dudit moyen collimateur (20), de manière à ajuster l'alignement dudit moyen collimateur (20) par rapport à ladite source de rayonnement.
